Europäisches Patentamt

European Patent Office

Office européen des brevets

(11) Veröffentlichungsnummer: **0 266 644**
**B1**

# (12) EUROPÄISCHE PATENTSCHRIFT

(45) Veröffentlichungstag der Patentschrift:
28.03.90

(51) Int. Cl.⁴: **B65B 5/02**

(21) Anmeldenummer: **87115587.5**

(22) Anmeldetag: **23.10.87**

(54) Verfahren und Vorrichtung zum automatischen Verpacken einer zerbrechlichen Ware in einer Faltschachtel.

(30) Priorität: **31.10.86 DE 3637112**

(43) Veröffentlichungstag der Anmeldung:
**11.05.88 Patentblatt 88/19**

(45) Bekanntmachung des Hinweises auf die Patenterteilung:
**28.03.90 Patentblatt 90/13**

(84) Benannte Vertragsstaaten:
**AT BE CH DE ES FR GB GR IT LI NL SE**

(56) Entgegenhaltungen:
**DE-A- 2 304 642**
**DE-B- 1 151 457**
**US-A- 3 673 763**

(73) Patentinhaber: **4P Nicolaus Kempten GmbH, Ulmer Strasse 18, D-8960 Kempten(DE)**
Patentinhaber: **Fischer, Wilhelm, Weidacher Strasse 1-3, D-8968 Durach(DE)**

(72) Erfinder: **Fischer,Wilhelm, Weidacher Strasse 1-3, D-8968 Durach(DE)**

(74) Vertreter: **Hutzelmann, Gerhard, Duracher Strasse 22, D-8960 Kempten(DE)**

## Beschreibung

Die Erfindung bezieht sich auf ein Verfahren und eine Vorrichtung zum automatischen Verpacken einer zerbrechlichen Ware in einer Faltschachtel von rechteckiger oder quadratischer Grundfläche.

Es ist bekannt, zerbrechliche Ware behutsam in das fertige Bodenteil einer mit einem Deckel Verschließbaren Schachtel einzufüllen und danach den Deckel auf das Bodenteil aufzusetzen. Eine solche Verfahrensweise setzt, will man sie automatisieren, ein schrittweises Verfahren voraus, bei dem das Anlegen der Schachtel-Bodenteile und das Zuführen der Schachtel-Deckel einen erheblichen Platz in Anspruch nehmen. Außerdem ist die Leistung einer solchen Verpackungsanlage sehr gering.

Im Prinzip wird mit der Erfindung eine wesentliche Steigerung der Leistung zur automatischen Verpackung zerbrechlicher Ware angestrebt, wobei die spezielle Aufgabe der Erfindung darin liegt, eine zerbrechliche Ware während eines kontinuierlichen Vorschubs in eine Faltschachtel zu füllen und die Faltschachtel durch Klebung zu verschließen, ohne die Ware mechanisch zu belasten.

Hierbei werden als "zerbrechliche" Ware alle Güter verstanden, die keiner Druckeinwirkung oder dergleichen Belastung ausgesetzt werden dürfen, wie z.B. Backwaren, tiefgefrorene Kost, Gegenstände aus Glas, Keramik oder sonstigen zerbrechlichen Materialien. In Bezug auf die genannten Backwaren, tiefgefrorene Kost oder dergleichen wird der Begriff "zerbrechlich" in dem Sinn verstanden, daß keine Berührung dieser Waren durch die Faltschachtelteile in einem Ausmaß stattfinden darf, die zur Beeinträchtigung der Ware bzw. ihrer Qualität führen könnte.

Das erfindungsgemäße Verfahren zur Lösung dieser Aufgabe besteht aus den Verfahrensschritten nach Anspruch 1.

Mit diesem Verfahren wird erreicht, das Formen, Füllen und Schließen einer Faltschachtel in einem kontinuierlichen Arbeitsgang durchzuführen und dabei die Leistung erheblich zu steigern. Das Schließen und Verleimen der Deckellaschen im Anschluß an den Füllvorgang führt nicht zur Belastung der eingefüllten Ware. Einerseits empfiehlt es sich, einen besonders schnell abbindenden Klebstoff zu verwenden. Hierfür sind sogenannte Schmelzkleber besonders geeignet, die in erhitztem und daher flüssigem Zustand aus düsenartigen Körpern aufgetragen werden und durch Abkühlung schnell abbinden. Da die Deckellaschen nach dem Faltvorgang noch eine Bewegungstendenz entgegen der Abbiegerichtung besitzen, genügt es, die verleimten und sich überlappenden Randbereiche der Deckellaschen längs einer Andrückleiste zu bewegen, die der Rückstellkraft der Deckellaschen entgegenwirkt.

Falls es erforderlich sein sollte, einen Klebstoff zu verwenden, der eine intensivere Andrückkraft auf die Deckellaschen voraussetzt, empfiehlt es sich, die Deckellaschen über ein ortsfestes, an dem der Förderrichtung entgegengesetzt liegenden Ende gehaltenes Blech zu falten, derart, daß dieses Blech zwischen der eingefüllten Ware und den Deckellaschen zu liegen kommt. In diesem Fall kann von außen her eine größere Kraft auf die sich überlappenden Randbereiche der Deckellaschen zur Einwirkung gebracht werden, weil das Blech die Gegenkraft aufnimmt und dafür sorgt, daß die Ware nicht belastet werden kann.

Das Verleimen der stirnseitig liegenden Schließlaschen würde jedoch nicht ohne weiteres kontinuierlich und ohne Belastung der Ware stattfinden können. Um diese Schwierigkeiten zu vermeiden, wird die gefüllte und an ihren Deckellaschen bereits verschlossene Faltschachtel im Zuge ihrer kontinuierlichen Vorwärtsbewegung um 90° um eine vertikale Achse gedreht. Nun liegen die Schließlaschen parallel zur Förderrichtung und können ohne Belastung der Ware abgebogen, mit Klebstoff versehen und aneinandergedrückt werden.

Eine vorteilhafte Vorrichtung zur Durchführung des erfindungsgemäßen Verfahrens ergibt sich aus den Ansprüchen 2 bis 4.

Einzelheiten der Erfindung sind in der Zeichnung schematisch und beispielsweise dargestellt. Es zeigen:

Fig. 1 eine Draufsicht auf einen Zuschnitt einer Faltschachtel,

Fig. 2 eine Vorderansicht des zur Befüllung der Faltschachtel vorgeformten Zuschnittes,

Fig. 3 einen Querschnitt durch die mit der Ware gefüllte Faltschachtel,

Fig. 4 eine Draufsicht auf die gefüllte Faltschachtel gemäß Fig. 3 und

Fig. 5+6 schematische Seitenansicht und Draufsicht auf eine Fördereinrichtung zum Verdrehen einer gefüllten Faltschachtel.

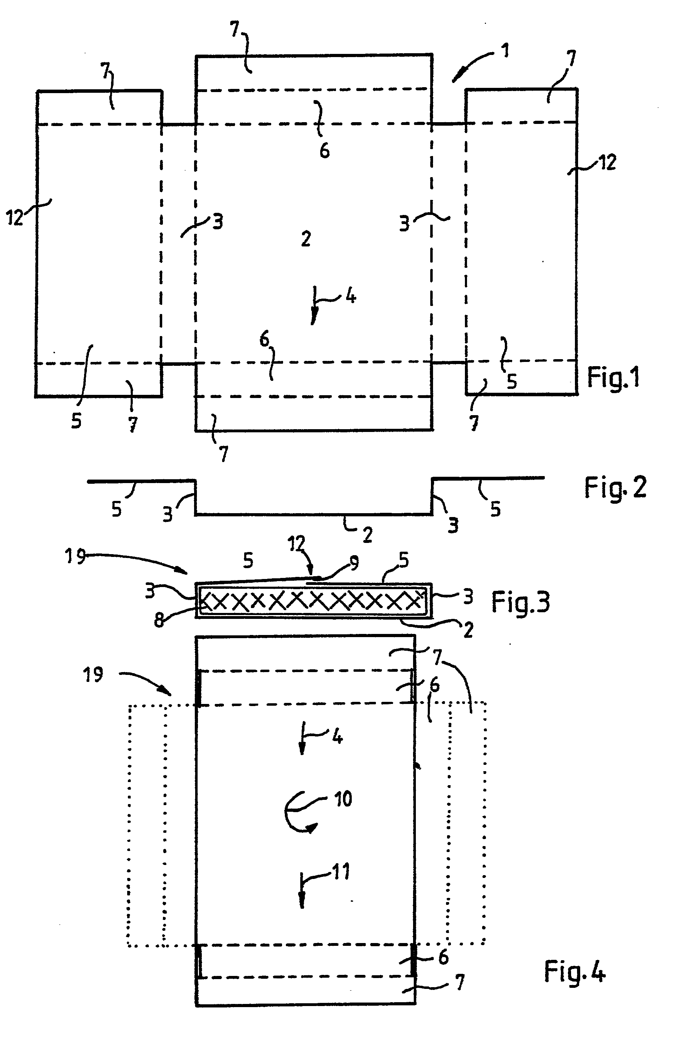

Im Beispiel der Fig. 1 ist der Zuschnitt (1) einer Faltschachtel (19) in Draufsicht gezeigt, wobei davon ausgegangen ist, daß die Bodenfläche (2) der Faltschachtel (19) einen rechteckigen oder quadratischen Grundriß haben soll. Bezogen auf die mit dem Pfeil (4) dargestellte Förderrichtung zur Bewegung des Faltschachtelzuschnittes (1) sind parallel zu dieser Richtung die beiden Seitenwände (3) mit den daran sich anschließenden Deckellaschen (5) vorgesehen, wobei die Breite der Seitenwände (3) mindestens der Höhe der zu verpackenden Ware entspricht. Die in Förderrichtung quer hierzu sich erstreckenden Seitenwände (6) weisen angrenzende Schließlaschen (7) auf, die mit den Schließlaschen (7) der Deckellaschen (5) bei der Bildung der Faltschachtel zusammenwirken. Mit (12) sind die überlappenden Ränder der Deckellaschen (5) bezeichnet.

Diese oder ähnlich geformte Faltschachtelzuschnitte (1) werden beim erfindungsgemäßen Verfahren von einem Zuschnittstapel abgezogen und einem Förderer mit kontinuierlichem Vorschub übergeben.

Im Zuge eines ersten Verfahrensabschnittes wird der einzelne Zuschnitt (1) in eine krempenartige Stellung vorgeformt, wie sie im Schnitt aus Fig. 2 hervorgeht. Dabei werden die Seitenwände (3) durch Falten aufrecht gestellt und die Deckellaschen (5) in entgegengesetzter Richtung von den Seitenwänden (3) wieder abgebogen. Es entsteht hierdurch ein stirnseitig offenes, krempenartiges Bodenteil der Faltschachtel, das während eines kontinuierlichen Vorschubs mit der zerbrechlichen Ware gefüllt werden kann. Es versteht sich von selbst, daß die aufrechten Seitenwände (3) des Faltschachtelzuschnittes (1) während ihres Vorschubs seitlich von außen geführt sind.

In Fig. 3 ist die gefüllte Faltschachtel (19) im Schnitt gezeigt, wobei mit (8) die zerbrechliche Ware angedeutet ist. Im Beispiel mag diese Ware (8) eine tiefgekühlte Pizza sein, ohne daß die Erfindung darauf beschränkt ist. Die Deckellaschen (5) sind in diesem Beispiel bereits umgebogen und mit Klebstoff (9) versehen, der auf eine der Deckellaschen (5) im Bereich der überlappenden Ränder (12) aufgebracht ist. Bevorzugt werden Schmelzkleber verwendet, die eine schnelle Abbindezeit besitzen.

In Fig. 4 ist die Draufsicht der gefüllten Faltschachtel gemäß Fig. 3 gezeigt, woraus erkennbar ist, daß sich die Seitenwände (6) und die sich daran anschließenden Schließlaschen (7) in Förderrichtung (4) an der Faltschachtel (19) voraus- bzw. zurückliegend befinden.

Die Erfindung sieht nun vor, daß die gefüllte Faltschachtel (19) während ihres Vorschubs in Förderrichtung (4) um 90° um eine vertikale Achse gedreht wird, was durch den Pfeil (10) verdeutlicht wird, der die Schwenkbewegung symbolisieren soll. Durch diese Drehbewegung kommen die Seitenwände (6) und Schließlaschen (7), bezogen auf die beibehaltene Förderrichtung (4) bzw. (11) in die punktiert angedeutete Lage der Fig. 4. Während nun die Faltschachtel (19) in der Förderrichtung (4,11) weiterbewegt wird, können die nun seitwärts liegenden Seitenwände (6) und Schließlaschen (7) abgebogen, mit Klebstoff versehen und anschließend mit den Deckellaschen (5) verleimt werden.

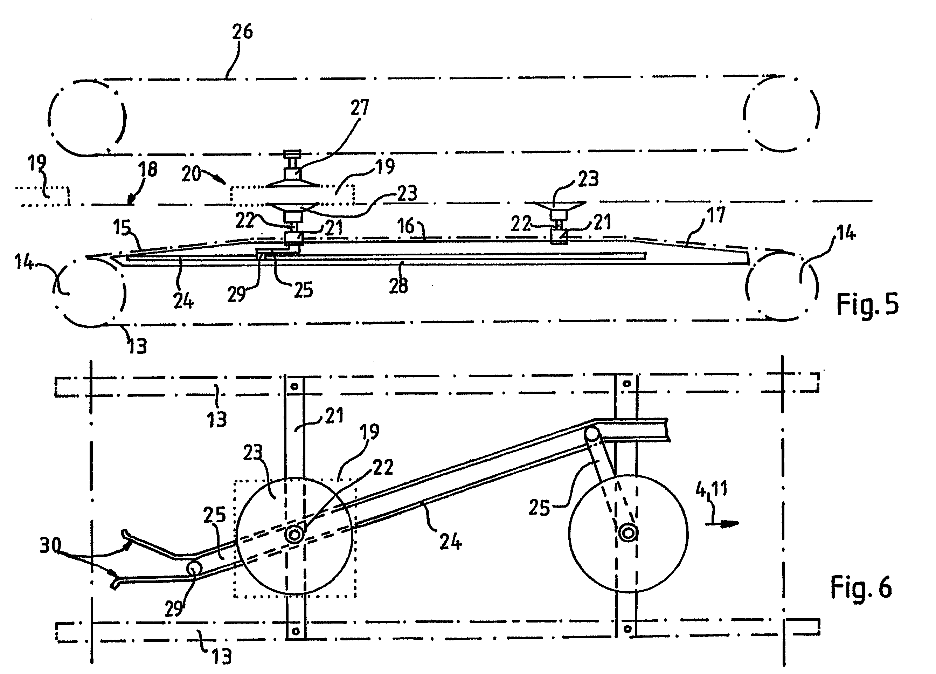

In den Fig. 5 und 6 wird gezeigt, wie man das Drehen der Faltschachtel (19) während eines kontinuierlichen Vorschubs durchführen kann. Hierbei wird davon ausgegangen, daß die gemäß Fig. 3 und 4 gefüllten Faltschachteln (19) auf einer Förderebene (18) mit einem nicht dargestellten, aber üblichen Förderer voranbewegt werden.

Unterhalb dieser Förderebene (18) befindet sich ein umlaufender Förderer (13), beispielsweise in Form einer Kette, die um Umlenkrollen (14) geführt wird. Wie die Fig. 6 zeigt, sind zwei solche umlaufende Förderer (13) parallel zueinander angeordnet. Der obere Trum dieses Förderers (13) wird längs einer ortsfesten Führung (28) bewegt und erhält damit einen ansteigenden Ast (15), einen in der angehobenen Lage verbleibenden Ast (16) und einen wieder absteigenden Ast (17).

Mit den Förderern (13) sind quer sich erstreckende Schienen (21) in einem Abstand zueinander verbunden, der dem Abstand der längs der Förderebene (18) bewegten Faltschachteln (19) entspricht. Folglich hat der Förderer (13) auch die gleiche Vorschubgeschwindigkeit wie die Faltschachtel (19). An den Schienen (21) sind Halteelemente angeordnet, die aus einem vertikal sich erstreckenden Lager (22) und einem damit verbundenen Auflageteller (23) bestehen. Mit Hilfe der Lager (22) kann der Auflageteller (23) an der Schiene (21) um die vertikale Achse verdreht werden. Die Verdrehung wird durch eine Lasche (25) herbeigeführt, die mit einem daran befindlichen Gleitelement (29), z.B. einer Rolle, in eine ortsfeste Schiene (24) eingreift, die - bezogen auf die Förderrichtung (4,11) - schräg angeordnet ist. Während der einzelne Auflageteller (23) beim Bewegen längs des ansteigenden Astes (15) von unten her gegen die Faltschachtel (19) heran geführt wird, gelangt das Gleitelement (29) der Lasche (25) in den sich verjüngenden Einlaufschacht (30) der Schiene (24). Beim Durchlauf des Gleitelementes (29) längs der Schiene (24) wird die Lasche (25) in Uhrzeigerrichtung um 90° um das Lager (22) gedreht. An dieser Drehbewegung nimmt der Auflageteller (23) und somit auch die Faltschachtel (19) mit teil, ohne daß der Inhalt der Faltschachtel berührt oder einer Belastung ausgesetzt wird.

Die Fig. 5 zeigt im übrigen, daß oberhalb des Förderers (13) ein parallel sich dazu erstreckender weiterer Förderer (26) bzw. Förderpaar (26) angeordnet sein kann, das in eben derselben Weise Halteelemente (27) trägt. Diese Halteelemente können von oben her die Oberseite der Faltschachteln (19) tangieren und damit eine Begrenzung bilden, die verhindert, daß beim Drehen der Faltschachtel (19) eine unvorhergesehene Verschiebung der Faltschachtel auf dem Auflageteller (23) stattfinden kann.

## Patentansprüche

1. Verfahren zum automatischen Verpacken einer zerbrechlichen Ware (8) in einer Faltschachtel von rechteckiger oder quadratischer Grundfläche, gekennzeichnet durch folgende im Zuge einer kontinuierlichen Bewegung stattfindende Verfahrensschritte:

1.1 der einzelne aus einem Stapel vereinzelte Faltschachtelzuschnitt wird krempenartig vorgeformt, indem die zur Förderrichtung parallelen Seitenwände (3) aufwärts und die daran seitlich anschließenden Deckellaschen (5) parallel zur Förderebene nach außen abgebogen werden;

1.2 die Ware wird in das so gebildete, an der Vorder- und Rückseite aber noch offene Bodenteil der Faltschachtel eingefüllt;

1.3 die Deckellaschen (5) werden in die Schließstellung umgebogen und an ihren sich überlappenden Rändern (12) verleimt;

1.4 die einzelne gefüllte Faltschachtel wird während des kontinuierlichen Vorschubes um 90° um eine vertikale Achse gedreht;

1.5 die nun seitlich liegenden Seitenwände (6) und Schließlaschen (7) werden in die Schließstellung umgebogen und mit den Deckellaschen (5) verleimt.

2. Vorrichtung zur Durchführung des Verfahrens nach Anspruch 1, dadurch gekennzeichnet, daß an einem unterhalb der Förderebene (18) für die Faltschachtel (19) angeordneten und in deren Vorschubrichtung (4) umlaufenden Förderer (13) tellerförmige Halteelemente (22,23) drehbar gelagert sind und längs einer schräg zur Vorschubrichtung (4) sich erstreckende Schiene (24) geführt sind derart, daß die tellerförmigen Halteelemente (22,23) mit der darauf ruhenden Faltschachtel (19) während der Bewegungsphase längs der Schiene (24) um 90° gedreht werden.

3. Vorrichtung nach Anspruch 2, dadurch gekennzeichnet, daß das obere Trum des umlaufenden Förderers (13) zwischen einer ansteigenden (15) und einer abfallenden (17) Strecke eine geradlinige Arbeitsstrecke (16) aufweist, in deren Bereich die Schiene (24) angeordnet ist.

4. Vorrichtung nach Anspruch 2 oder 3, dadurch gekennzeichnet, daß oberhalb der Förderebene (18) für die Faltschachtel (19) ein weiterer umlaufender Förderer (26) mit daran drehbar gelagerten tellerförmigen Halteelementen (27) angeordnet ist, die paarweise mit den Halteelementen (22,23) des unteren Förderers (13) zusammenwirken und zwischen sich die Faltschachtel (19) halten.

## Claims

1. Process for the automatic packaging of a fragile product (8) in a folding carton with a rectangular or square base, wherein the process is carried out in the following stages in the course of a continuous forward movement:

1.1 The individual folding carton blank is removed from a magazine and is formed initially by folding the side panels (3) parallel to the transport direction upwards and the lid flaps (5) adjacent to them outwards parallel to the transport surface;

1.2 The product is filled in the base section of the folding carton which has been formed in this way but which is still open at the front and the back;

1.3 The lid flaps (5) are folded into the closing position and their overlapping edges (12) are glued together;

1.4 The individual filled folding carton is turned through 90° around a vertical axis during a continuous advance operation;

1.5 The side panels (6) and closure flaps (7) that are now located at the sides are folded into the closing position and are glued to the lid flaps (5).

2. Apparatus for carrying out the process according to claim 1, wherein pivoted disc-shaped retaining elements (22, 23) are provided on a conveyor (13), which is located below the transport surface (18) for the folding carton (19) and revolves in the transport direction (4) of the folding carton (19) and are guided along a rail (24) that extends at an angle in relation to the transport direction (4) in such a way that the disc-shaped retaining elements (22, 23) and the folding carton (19) resting on it are turned through 90° while they are being moved along the rail (24).

3. Apparatus according to claim 2, wherein the upper part of the revolving conveyor (13) has a straight section (16), in the area of which the rail (24) is located, between a section (15) that slopes upwards and a section (17) that slopes downwards.

4. Apparatus according to claim 2 or 3, wherein a further revolving conveyor (26) with pivoted disc-shaped retaining elements (27) is located above the transport surface (18) for the folding carton (19), these retaining elements (27) forming pairs with the retaining elements (22, 23) of the lower conveyor (13) to secure the position of the folding carton (19) between them.

## Revendications

1. Procédé d'emballage automatique d'un article fragile (8) dans une boîte réalisable par pliage de surface de base rectangulaire ou carrée, caractérisé par les étapes opératoires suivantes, se déroulant au cours d'un mouvement continu:

1.1 le flan de boîte réalisable par pliage, extrait d'une pile, est préformé en creux par pliage vers le haut des parois latérales (3), parallèles au sens de transport, et par pliage vers l'extérieur, parallèlement au plan de transport, des pattes de couvercle (5) reliées latéralement aux parois précitées;

1.2 l'article est introduit dans la partie de fond de boîte réalisable par pliage qui a été ainsi créée et qui est cependant encore ouverte sur le côté avant et le côté arrière;

1.3 les pattes de couvercle (5) sont rabattues dans la position de fermeture et sont collées sur leurs bords en chevauchement (12);

1.4 la boîte réalisable par pliage, remplie, est tournée de 90° autour d'un axe vertical pendant le mouvement continu d'avancement;

1.5 les parois latérales (6) et les rabats de fermeture (7), disposés maintenant latéralement, sont rabattus dans la position de fermeture et sont collés avec les pattes de couvercle (5).

2. Dispositif pour la mise en œuvre du procédé selon la revendication 1, caractérisé en ce que des éléments de maintien (22, 23) en forme de plateau sont montés de façon tournante sur un transporteur (13) disposé en dessous du plan de transport (18) des boîtes réalisables par pliage (19) et circulant dans leur sens d'avancement (4) et sont guidés le long d'un rail (24) s'étendant en oblique par rapport au sens d'avancement (4) de telle sorte que les éléments de maintien (22, 23) en forme de plateaux tournent de 90° avec les boîtes réalisables par pliage (19) reposant sur eux pendant la phase de déplacement le long du rail (24).

3. Dispositif selon la revendication 2, caractérisé en ce que le brin supérieur du transporteur tournant (13) comporte, entre une branche montante (15) et une branche descendante (17), une branche rectiligne de travail (16) dans la zone de laquelle est disposé le rail (24).

4. Dispositif selon la revendication 2 ou 3, caractérisé en ce qu'il est prévu au-dessus du plan de transport (18) des boîtes réalisables par pliage (19) un autre transporteur tournant (26) sur lequel sont montés de façon tournante des éléments de maintien (27) en forme de plateaux, qui coopèrent par paires avec les éléments de maintien (22, 23) du transporteur inférieur (13) et qui maintiennent entre eux les boîtes réalisables par pliage (19).

EP 0 266 644 B1

Fig.1

Fig.2

Fig.3

Fig.4

Fig. 6

Fig. 5